# EUROPÄISCHE PATENTSCHRIFT

(11) **EP 2 270 366 B1**
(45) Veröffentlichungstag und Bekanntmachung des Hinweises auf die Patenterteilung: **07.09.2016**
(21) Anmeldenummer: 10006795.8
(22) Anmeldetag: 01.07.2010
(51) Int. Cl.: F16H 61/00, F16J 15/08

(54) **Verbindungsanordnung**
Connection assembly
Dispositif de raccordement

(30) Priorität: 01.07.2009 DE 102009031208
(43) Veröffentlichungstag der Anmeldung: 05.01.2011
(73) Patentinhaber: ElringKlinger AG, 72581 Dettingen (DE)
(72) Erfinder: Wolf, Reiner, 72534 Hayingen (DE)
(74) Vertreter: Hoeger, Stellrecht & Partner Patentanwälte mbB

(56) Entgegenhaltungen:
- EP-A2- 1 143 174
- DE-A1- 2 849 018
- US-A- 3 549 157

## Beschreibung

Die Erfindung betrifft eine Verbindungsanordnung umfassend mindestens zwei jeweils eine vorgebbare Dickenerstreckung aufweisende Funktionslagen, wobei benachbarte Funktionslagen an mindestens einer Festlegestelle aneinander festgelegt sind, wobei an der mindestens einen Festlegestelle eine Funktionslage mit einem freien Randabschnittsbereich zumindest teilweise in einen zugeordneten Randbereich der jeweils benachbarten Funktionslage eingreift.

Eine derartige Verbindungsanordnung ist beispielsweise aus dem gattungsgemäßen DE 197 25 986 A1 bekannt geworden, welche eine metallische Zylinderkopfdichtung für eine Brennkraftmaschine betrifft, mit wenigstens einer Deckblechanordnung mit einem flachen Deckblech, einer oder mehreren nebeneinander angeordneten Öffnungen entsprechend den Brennkammern der Brennmaschine und jeweils einer um den Randbereich der jeweiligen Öffnung herum verlaufenden Sicke, wobei die Sicke zum Rand der zugehörigen Öffnung beabstandet angeordnet und ein konzentrisch zur Sicke angeordneter, als Brennraumüberhöhung und als Verformungsbegrenzer für die Sicke dienender, ringförmiger Überhöhungsabschnitt vorgesehen ist. Dabei ist der jeweilige Randbereich, in dem die Sicke ausgebildet ist, in einem Ring ausgebildet, der im Wesentlichen durch einen Schlitz getrennt vom Deckblech ausgebildet ist.

Das Befestigen der Ringe an der Zylinderkopfdichtung entsprechend den Öffnungen der Deckbleche erfolgt über Befestigungslaschen, die mit dem Trägerblech und dem Falzblech verbunden sind, was vorzugsweise über mittels Durchsetzfugen gebildete Fügepunkte oder auch über Schweißen, Löten, Kleben, Verstemmen oder dergleichen erreicht wird. Dabei werden die Fügepunkte, weil sie dickenmäßig entsprechend auftragen, im Bereich von freien Wasser- oder Ölkanälen des Verbrennungsmotors angeordnet oder mit dem zugehörigen Deckblech ausgebildet, wobei in dem Trägerblech und dem Falzblech entsprechende Ausnehmungen zur Aufnahme der Fügepunkte angeordnet sind. Ferner können die Befestigungslaschen und folglich die Ringe unmittelbar einstückig mit den Deckblechen ausgebildet sein, wobei die Befestigungslaschen schmale Verbindungsstege bilden, welche insbesondere benachbart zu Schraubendurchtrittslöchern angeordnet sind.

Aus US 5,460,387 und DE 693 04 461 T2 ist eine Metalllaminatdichtung für einen Verbrennungsmotor mit einem Dichtungsmechanismus, welcher rund um eine Bohrung aus einer Aussparung und einem Flansch gebildet ist, bekannt. In einem ersten Metallblech ist eine erste Bohrung ausgebildet, in einem zweiten Metallblech entsprechend eine zweite Bohrung, die kleiner ist als die erste Bohrung, sowie ein Flansch, der sich von einem gekrümmten Abschnitt ausgehend in eine Richtung von der zweiten Bohrung weg erstreckt. Der Dichtmechanismus wird dadurch ausgebildet, dass das erste Blech eine ringförmige Aussparung aufweist, die an der oberen Seite rund um die erste Bohrung so ausgebildet ist, dass sie einen abgestuften Abschnitt bildet, der eine Dicke aufweist, die geringer ist als die Dicke außerhalb des abgesetzten Abschnitts, und dass der genannte Flansch sich seitlich nicht über den abgestuften Abschnitt hinaus erstreckt und eine Dicke aufweist, die größer ist als die Tiefe der ringförmigen Aussparung, so dass, wenn die Dichtung festgezogen wird, der Flansch über der ringförmigen Aussparung angeordnet ist, um für einen Oberflächendruck rund um die Bohrung des Motors zu sorgen, der größer ist als außerhalb der Aussparung.

Da der am zweiten Metallblech vorgesehene Flansch dicker ausgebildet ist als die Tiefe der am ersten Metallblech ausgebildeten Aussparung, wird die Sicke nicht vollständig zusammengedrückt, wenn die Dichtung festgezogen wird. Somit werden eine Kriechermüdung der Sicke und eine Verformung des Randabschnitts der Aussparung verhindert, wenn die Dichtung festgezogen wird. Wesentlich für die Funktionsweise des Abdichtungsmechanismus ist, dass der Flansch leicht nach oben von der oberen Fläche des entsprechenden Blechs aus übersteht. Somit kann der Flansch zuverlässig rund um die entsprechende Bohrung abdichten. Die Sicke trägt dazu bei, um die entsprechende Bohrung abzudichten und eine wirksame Dichtung herzustellen.

Verbindungsanordnungen, insbesondere Dichtungsanordnungen, in Form von flächig ausgebildeten Funktionslagen zwischen abzudichtenden Bauteilen hydraulischer Einrichtungen, wie etwa zwischen Gehäusen von Automatikgetrieben und einer Getriebesteuerplatte, die mit Hilfe der jeweiligen Funktionslage eine Abdichtung ihrer komplexen labyrinthartigen Fluidwege erfahren, sind bekannt (vgl. beispielsweise DE 10 2007 019 946 A1). Derartige Funktionslagen können als Dichtelemente lippenförmige Dichtstreifen aus einem elastomeren Material aufweisen oder in der Art einer Metallsickendichtung mit aus ihrer Oberfläche vorstehenden Dichtgeometrien ausgebildet sein, wobei die dahingehenden vorstehenden Dichtgeometrien regelmäßig einstückiger Bestandteil der Metallsickendichtung sind.

Zum Anbringen derartiger Funktionslagen an dem jeweiligen Bauteil werden regelmäßig Verbindungselemente, wie Flachnieten od. dgl., auf dem abzudichtenden Bauteil, beispielsweise in Form einer Getriebesteuerplatte oder einem sonstigen Bauteil einer hydraulischen Einrichtung, in positionierender Weise angeordnet, wobei ein lagegerechter Einbau der jeweiligen Funktionslage mit dem abzudichtenden Bauteil erfolgt. Bekannt ist auch, solche Funktionslagen auf einem Bauteil, wie einer Getriebesteuerplatte, durch ein Schweißverfahren, wie beispielsweise Punktschweißen, zu fixieren. Mithin benötigen die bekannten Verfahren zur Fixierung von Funktionslagen an Bauteilen entweder zusätzliches Montagematerial oder aufwendige Herstellproduktionsschritte sind durchzuführen, wie beispielsweise die genannten Schweißverfahren.

Ausgehend von diesem Stand der Technik stellt sich daher die Erfindung die Aufgabe, eine Verbindungsanordnung der eingangs genannten Art unter Beibehalten ihrer Vorteile, wie einer guten Abdichtung, derart weiter auszugestalten, dass sie sich produktionstechnisch einfach und in kostengünstiger Weise herstellen läßt.

Erfindungsgemäß ist diese Aufgabe gemäß dem kennzeichnenden Teil des Patentanspruches 1 dadurch gelöst, dass an zumindest einer dieser Festlegestellen der Eingriff des jeweiligen Randabschnittsbereichs in Bezug auf die Dickenerstreckung der jeweiligen benachbarten Funktionslage überstandsfrei ausgebildet ist. Überstandsfrei im Sinne der Erfindung meint, dass die Dickenerstreckung der beiden an einer Festlegestelle aneinander festgelegten benachbarten Funktionslagen im Bereich der Festlegestelle geringer oder höchstens gleich der Dickenerstreckung der beiden Funktionslagen in benachbarten Bereichen, d.h., unmittelbar benachbart zum entsprechenden Randbereich bzw. Randabschnittsbereich, ist.

Die Funktionslage weist zumindest einen Randabschnittsbereich als Festlegebereich auf, der beispielsweise nach Umformung einen Formschluß mit der benachbarten Funktionslage, wie einem abzudichtenden Bauteil, eingeht. Durch diese konstruktive Maßnahme ist erreicht, dass im Wesentlichen ohne Materialmehraufwand und ohne zusätzliches Einsatzmaterial, wie Niet-, Schrauben- oder Schweißnahtmaterial, sowie ohne komplizierte Vorpositionierarbeiten eine exakte, formschlüssige Anlage der Funktionslagen, insbesondere an einem abzudichtenden Bauteil in fluiddichter Form, erreicht ist.

In einer bevorzugten Ausführungsform der erfindungsgemäßen Verbindungsanordnung ist die Dickenerstreckung der den jeweiligen Randabschnittsbereich aufweisenden Funktionslage zumindest im Randabschnittsbereich im Wesentlichen konstant. Anders ausgedrückt, wird die Wandstärke des Randabschnittsbereichs der entsprechenden Funktionslage durch den Festlegevorgang, wie einen Umformvorgang, nicht verändert.

Unabhängig von dem Einsatzmaterial für die Funktionslage, die bevorzugt aus einem metallenen flächigen Zuschnitt gebildet ist, ist es jedenfalls vorteilhaft, die angesprochene Umformung als sog. Kaltumformung vorzunehmen. Dabei kann der Umformbereich innerhalb der Fläche der Funktionslage selbst angeordnet sein, indem beispielsweise Material um eine vergleichsweise räumlich klein gehaltene Bohrung, Ausstanzung, Ausfräsung od. dgl. in der Funktionslage selbst ausgeformt wird, und/oder es kann der Umformbereich auch am außenumfangsseitigen Rand der flächigen Funktionslage angeordnet sein, beispielsweise indem vorspringende Zungen nach ihrer Umformung die Formschlußverbindung zu dem abzudichtenden Bauteil herstellen. Grundsätzlich können für die angesprochenen Umformvorgänge auch Prozesse der Warmumformung eingesetzt werden.

Weiter ist es vorteilhaft, dass an mindestens einer Festlegestelle der jeweilige Randabschnittsbereich mit der zugehörigen Funktionslage einen spitzen Winkel, vorzugsweise von 60° oder kleiner, einschließt. Der eingeschlossene Winkel beträgt besonders bevorzugt 45°. Der Winkel wird von der Ebene, entlang der sich die im Wesentlichen flache Funktionslage erstreckt, und der Ausrichtung des Randabschnittsbereich nach dem Festlegevorgang definiert.

Um eine besonders sichere Festlegung der Funktionslage an der jeweiligen benachbarten Funktionslage, wie einer Getriebesteuerplatte oder einem anderen Bauteil einer hydraulischen Anlage, zu gewährleisten, ist bevorzugt vorgesehen, dass an mindestens einer Festlegestelle die jeweilige benachbarte Funktionslage einen Hinterschnittbereich aufweist, an den der Randabschnittsbereich der Funktionslage zumindest teilweise zur formschlüssigen Anlage kommt. Anders ausgedrückt, ist es vorteilhaft, den Anlagebereich für aus der Funktionslage umgeformtes Material als Hinterschnitt in der benachbarten Funktionslage auszubilden.

Der Hinterschnittbereich kann als Stufenabschnitt mit sich von der Funktionslage entfernt erweiterndem Durchmesser ausgebildet sein oder zumindest teilweise konisch ausgebildete Abschnittsbereiche aufweisen. Der Hinterschnitt kann in der Fläche der jeweiligen benachbarten Funktionslage etwa in der Art einer Stufenbohrung ausgebildet sein, wobei ausgehend von der in den Hinterschnitt unter zumindest teilweiser Anlage eingreifenden Funktionslage sich zur freien Seite der benachbarten Funktionslage hin oder zu der Seite, an der eine weitere Funktionslage der Verbindungsanordnung anliegt, sich der Durchmesser der Bohrung verbreitert. Anstelle von einzubringenden Bohrungen kann der Hinterschnitt auch durch übliche Verfahren, wie Stanzen, Fräsen, Metallschneiden od. dgl., eingebracht sein. Insgesamt wird durch den derart stufenartig ausgebildeten Hinterschnitt im Querschnitt gesehen eine vorstehende Randnase gebildet, die eine Art Widerlager oder Umfassungsrand für den Übergriff der Funktionslage in diesem Bereich ausbildet. Anstelle eines stufenförmigen Hinterschnittes kann auch ein solcher mit im Querschnitt gesehen konisch ausgebildeter Anlagewand treten.

In einer weiteren bevorzugten Ausführungsform der erfindungsgemäßen Verbindungsanordnung ist an mindestens einer Festlegestelle der jeweilige Randbereich am äußeren Rand der jeweiligen benachbarten Funktionslage angeordnet. In einer weiteren bevorzugten Ausführungsform ist an mindestens einer Festlegestelle der jeweilige Randbereich durch eine in der jeweiligen benachbarten Funktionslage ausgebildete Ausnehmung oder Bohrung vorgegeben. Hierbei ist zweckmäßigerweise der jeweilige Randabschnittsbereich an einer in der jeweiligen Funktionslage ausgebildeten weiteren Ausnehmung oder weiteren Bohrung angeordnet. Weiter ist es vorteilhaft, wenn mindestens zwei Festlegestellen an den Funktionslagen ausgebildet sind.

Eine weitere vorteilhafte Ausgestaltung der erfindungsgemäßen Verbindungsanordnung ist dadurch gekennzeichnet, dass mindestens eine Funktionslage mindestens ein Dichtelement aufweist, das jeweils einen Abdichtbereich bildet. Es ist zudem vorteilhaft, mindestens eine Funktionslage aus einem metallischen Werkstoff auszubilden. Mindestens eine Funktionslage ist besonders bevorzugt eine flächig ausgebildete Metallsickendichtung.

In einer weiteren bevorzugten Ausführungsform der Erfindung wird eine Verbindungsanordnung durch mindestens drei Funktionslagen und mindestens eine zwischenliegende Funktionslage in Form eines abzudichtenden Bauteiles gebildet. Hierbei kann mindestens eine der Funktionslagen, vorzugsweise das zwischenliegende Bauteil, eine Getriebesteuerplatte sein.

Bei einer besonders bevorzugten Ausführungsform der beanspruchten Verbindungsanordnung ist die Funktionslage als flächige Metallsickendichtung aus Aluminiummaterial ausgebildet und es sind zumindest zwei bevorzugt diagonal oder in anderer geometrischer Anordnung beabstandet zueinander angeordnete Umformbereiche innerhalb der jeweiligen Metallsickendichtungslage vorgesehen, um eine sichere Festlegung der Dichtlage an dem abzudichtenden Bauteil zu erreichen. Besonders bevorzugt ist weiter vorgesehen, dass auf beiden gegenüberliegenden Seiten des Bauteils sich jeweils eine Funktionslage befindet, die an den entsprechenden Hinterschnitten durch Umformung im Formschluß an dem Bauteil festgelegt werden.

Nachstehend ist die Erfindung anhand der Zeichnung im einzelnen erläutert. Dabei zeigen in prinzipieller und nicht maßstäblicher Darstellung die
- Fig.1: in der Art einer Explosionszeichnung eine schematische Schrägansicht einer erfindungsgemäßen Verbindungsanordnung , bestehend aus einer ersten Funktionslage, einer Getriebesteuerplatte als zwischenliegende Funktionslage und als abzudichtendes Bauteil und einer zweiten, auf der gegenüberliegenden Seite der Getriebesteuerplatte zu liegen kommenden Funktionslage;
- Fig.2: einen Querschnitt durch ein erstes Ausführungsbeispiel einer durch Umformung erfolgten Verbindung der beiden außenliegenden Funktionslagen mit der zwischenliegenden Funktionslage in Form einer Getriebesteuerplatte entsprechend der Darstellung nach der Fig.1;
- Fig.3: einen Querschnitt durch ein zweites Ausführungsbeispiel einer durch Umformung erfolgten Verbindung der beiden außenliegenden Funktionslagen mit der zwischenliegenden Funktionslage in Form der Getriebesteuerplatte entsprechend der Darstellung nach der Fig.1.

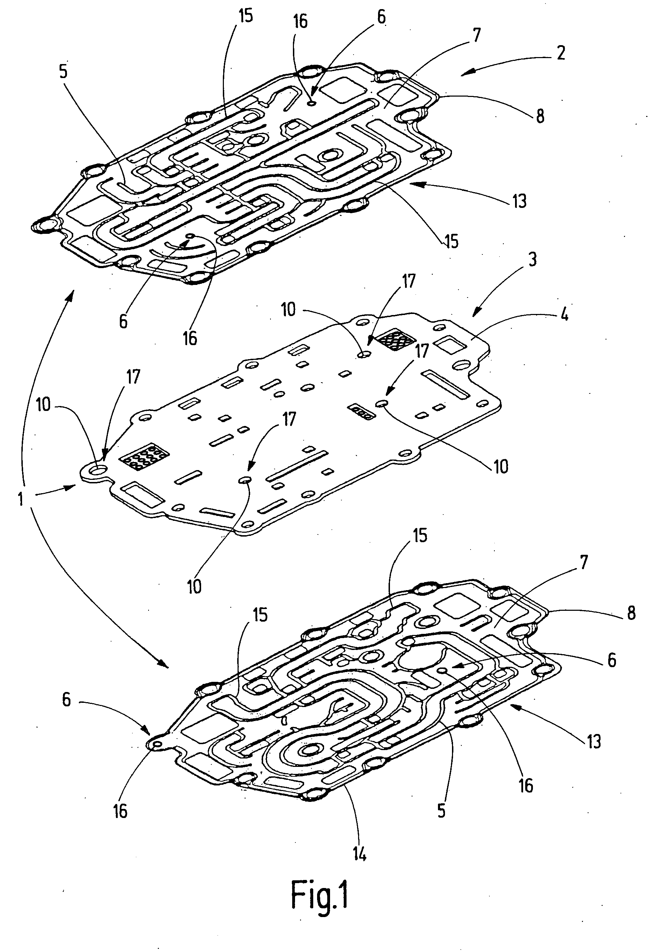

In der Fig.1 ist in der Art einer Explosionszeichnung eine schematische Schrägansicht einer Verbindungsanordnung 1 gezeigt, bestehend aus einer ersten Funktionslage 2, die mit Dichtelementen 5 auf ihrer dem Betrachter zugewandten Oberseite versehen ist, wobei eine zweite weitere Funktionslage 14 vorhanden ist, die ebenfalls mit vergleichbaren Dichtelementen 5 nunmehr in entgegengesetzter, nach unten weisender Richtung versehen ist. Zwischen den beiden Funktionslagen 2,14 ist ein abzudichtendes Bauteil, beispielsweise in Form einer Getriebesteuerplatte 4, als zwischenliegende Funktionslage 3 aufgenommen. Anstelle der Getriebesteuerplatte 4 könnte auch sonst ein hydraulisch abzudichtendes Bauteil zum Einsatz kommen, das eine Fluidführung, beispielsweise für Hydraulikmedien, erlaubt. Die außenliegenden Funktionslagen 2,14 sind mit labyrinthartigen, bevorzugt durch Prägung gebildete Sicken 15 als Metallsickendichtung 13 flächig gebildet und weisen im Wesentlichen einen rechteckartigen Grundriß auf.

Die genannten außenliegenden bzw. äußeren Funktionslagen 2,14 sind über ihre freien Seiten insoweit wiederum mit nicht näher dargestellten weiteren Bauteilen in Anlage, die beispielsweise Bestandteile eines Automatikgetriebes sind, um dergestalt die Getriebesteuerplatte 4 gegenüber den dahingehenden Getriebe-Bauteilen abzudichten. Die außenliegenden Funktionslagen 2,14 dienen in der konkreten Ausgestaltung des vorliegenden Ausführungsbeispiels also der Abdichtung der als Getriebesteuerplatte 4 ausgebildeten innen- bzw. zwischenliegenden Funktionslage 3, die insoweit nach außen hin die gleiche Grundrißform aufweist wie die außenliegenden Funktionslagen 2,14. Insoweit wären die weiteren, sich an die außenliegenden Funktionslagen 2,14 anschließenden Bauteile in Form der nicht näher dargestellten hydraulischen Steuerung sowie eines Gehäuse für das Automatikgetriebe von der Getriebesteuerplatte 4 entfernt an die außenliegenden Funktionslagen 2,14 anzuschließen. In der bei dahingehend ausgebildeten Getriebesteuerplatten üblichen Weise können die in Fig.1 nicht im einzelnen bezifferten Dichtmittel sich entlang von Labyrinthstrukturen um die labyrinthartigen Strömungswege der sich benachbart angliedernden Gehäuseteile dann anschließen.

Die außenliegenden Funktionslagen 2,14 können des weiteren in der Art einer Zusatzfunktion auch eine Fluidführung mit Fluidwegen bilden, durch die Betriebsfluide, wie Öl, zur Kühlung und Schmierung sowie zur Versorgung von einem hydrodynamischen Wandler oder zur elektrohydraulischen Ansteuerung des Automatikgetriebes geleitet werden. Ferner können die außenliegenden Funktionslagen 2,14 nicht im einzelnen dargestellte Siebeinrichtungen aufweisen, um dergestalt eine Sicherheitsfunktion durch filternde Abtrennung von Partikelverschmutzungen, wie Abrieb, zu realisieren, die als Restbestandteile aus einem spanenden Herstellvorgang für die Gehäuseteile verbleiben können. Wie bereits dargestellt, können die außenliegenden Funktionslagen 2,14 aber auch für andere Hydraulikapplikationen eingesetzt werden oder gar der Abdichtung von Baugruppen im Abgasstrang von Verbrennungskraftmotoren od. dgl. mit vergleichbar konstruktivem Aufwand dienen.

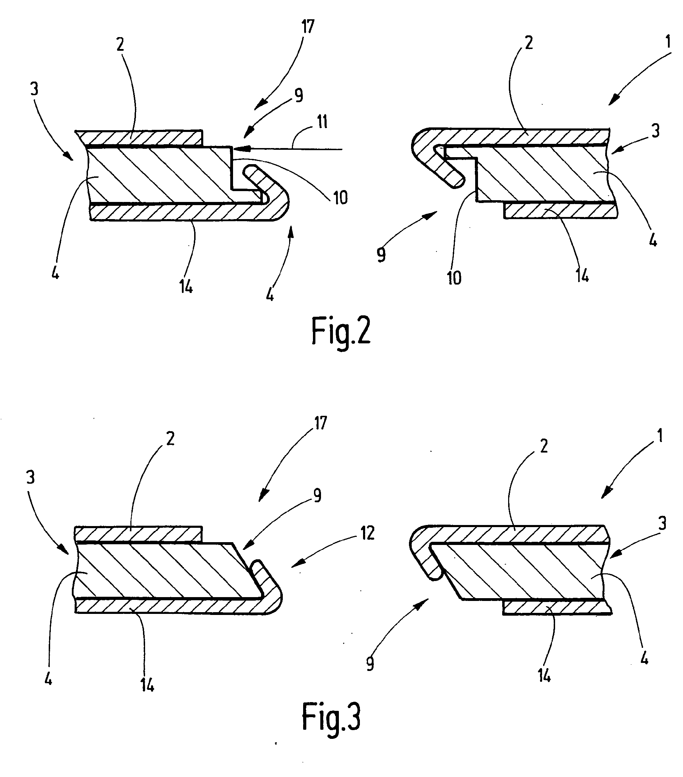

Um die erste und die zweite mit Dichtmitteln 5 versehenen Funktionslagen 2,14 an der genannten Getriebesteuerplatte 4 möglichst einfach, aber exakt vorpositionieren zu können und diese für eine weitere Montage der Komponenten festzulegen, ist bevorzugt ein Kaltumformverfahren ohne zusätzlichen Materialeinsatz vorgesehen. Zu diesem Zweck weisen die beiden außenliegenden Funktionslagen 2,14 Randabschnittsbereiche 6, mit anderen Worten Festlege- oder Umformbereiche, auf, die, wie dies die Fig. 2 und 3 in teilweisen Längsschnitten durch die Randabschnittsbereiche 6 und die benachbarte Funktionslage 3 (Getriebesteuerplatte 4) nach dem Festlege- bzw. Umformvorgang zeigen, zunächst durch Bohrungen 16 (vgl. Fig.1) in den außenliegenden Funktionslagen 2,14 gebildet sind, die mit vorher eingebrachten Bohrungen 17 in der benachbarten Funktionslage 3 in Form der Getriebesteuerplatte 4 von ihrer Mittenausrichtung deckungsgleich zusammenfallen, wobei die Bohrungen 16 vor dem Festlegen bzw. Umformen in den außenliegenden Funktionslagen 2,14 zunächst einen kleineren Durchmesser aufweisen als die Bohrungen 17 in der zwischenliegenden Funktionslage 3.

Wie insbesondere die Fig.2 zeigt, sind bei dem einen Ausführungsbeispiel die Bohrungen 17 in der Getriebesteuerplatte 4 als Stufenbohrungen 10 ausgeführt mit in der Tiefe der Getriebesteuerplatte 4 sich stufenartig erweiterndem Durchmesser 11. Wie des weiteren die Fig.3 für ein weiteres Ausführungsbeispiel der erfindungsgemäßen Verbindungsanordnung 1 zeigt, kann die Bohrung 17 sich in Blickrichtung auf die Fig.3 gesehen als nach oben hin konisch erweiternde Bohrung 12 ausgebildet sein. Wie bereits dargelegt, kann anstelle einer Bohrung 17 auch ein sonstiges spanabhebendes Verfahren treten, wie beispielsweise Fräsen; es sind aber auch Stanzund (Laser-)Schneidverfahren möglich, die unter Einsatz spezieller Werkzeuge die in den Fig.2 und 3 aufgezeigten stufenförmigen oder konischen Querschnittgeometrien von der Herstellungsseite her ermöglichen. An der gezeigten Festlegestelle wird durch einen Hinterschnittbereich 9 an der benachbarten zwischenliegenden Funktionslage 3 der jeweilige Randbereich für einen Eingriff des Randabschnittsbereiches 6 der außenliegenden Funktionslage 14 festgelegt. Anders ausgedrückt, greift der Randabschnittsbereich 6 der Funktionslage 14 in einen durch den Hinterschnittbereich 9 vorgegebenen Freiraum ein.

Festzuhalten bleibt, dass aber in jedem Fall durch die Form der Bohrung 17 oder der sonst insoweit vergleichbar hergestellten Ausnehmung in der benachbarten zwischenliegenden Funktionslage 3, hier in Form der Getriebesteuerplatte 4, ein durch die zwischenliegende Funktionslage 3 hindurchgehender Hinterschnittbereich 9 zur formschlüssigen Verankerung einer Funktionslage 2,14 geschaffen ist. Da die Randabschnittsbereiche 6 in den Funktionslagen 2,14 als Ringstruktur um die jeweils vergleichsweise kleine Bohrung 16 herumgeführt sind und insoweit ein ringförmig umzuformendes Funktionslagen-Material ausbilden, kann mit einem geeigneten, bevorzugt zylindrisch ausgebildeten Umformwerkzeug (nicht dargestellt), das in die Bohrungen 16 zumindest partiell eingreift, zum einen eine exakte Zentrierung der außenliegenden Funktionslagen 2,14 auf die zwischenliegende Funktionslage 3 bewirkt werden, um in einem Arbeitsgang eine Art Vormontage vorzunehmen, um dann zum anderen anschließend im weiteren Schritt durch Umformung die formschlüssige Verbindung der außenliegenden Funktionslagen 2,14 mit der benachbarten zwischenliegenden Funktionslage 3 zu erreichen.

Es ist bevorzugt vorgesehen, an jeweils zwei, sich mit vorgebbarem Abstand gegenüberliegenden Stellen in der Fläche 7 der außenliegenden Funktionslagen 2,14 die Randabschnittsbereiche 6 sowie die Hinterschnittbereiche 9 in der zwischenliegenden Funktionslage 3 in Form der Getriebesteuerplatte 4 anzuordnen und die Querschnitte des Hinterschnittbereiches 9Stufenanordnung und/oder konische Anordnung - spiegelbildlich in der Getriebesteuerplatte 4 derart zu positionieren, dass von beiden Seiten der Getriebesteuerplatte 4 her mit demselben Umformwerkzeug die jeweilige außenliegende Funktionslage 2,14 festgelegt werden kann.

Des weiteren kann es vorteilhaft sein, anstatt die Randabschnittbereiche 6 ausschließlich in die Fläche 7 der außenliegenden Funktionslagen 2,14 hineinzulegen, diese an deren Rand 8 anzuordnen und etwa durch aus dem allgemeinen Randverlauf hervorspringende Bereiche in Laschen- oder Zungenform diese im randseitigen Bereich der außenliegenden Funktionslagen 2,14 für einen Festlegevorgang an der benachbarten zwischenliegenden Funktionslage 3 umzuformen.

## Patentansprüche

1. Verbindungsanordnung umfassend:
- mindestens zwei jeweils eine vorgebbare Dickenerstreckung aufweisende Funktionslagen (2, 3, 14),
- wobei benachbarte Funktionslagen (2, 3, 14) an mindestens einer Festlegestelle aneinander festgelegt sind,
- wobei an der mindestens einen Festlegestelle eine Funktionslage (2, 14) mit mindestens einem freien Randabschnittsbereich (6) zumindest teilweise in einen zugeordneten Randbereich der jeweiligen benachbarten Funktionslage (3) eingreift,
- **dadurch gekennzeichnet, dass** an mindestens einer dieser Festlegestellen der Eingriff des jeweiligen Randabschnittsbereichs (6) in Bezug auf die Dickenerstreckung der jeweiligen benachbarten Funktionslage (3) überstandsfrei ausgebildet ist.

2. Verbindungsanordnung nach Anspruch 1, **dadurch gekennzeichnet, dass** die Dickenerstreckung der den jeweiligen Randabschnittsbereich (6) aufweisenden Funktionslage (2, 14) zumindest im Randabschnittsbereich (6) im Wesentlichen konstant ist.

3. Verbindungsanordnung nach Anspruch 1 oder 2, **dadurch gekennzeichnet, dass** an mindestens einer Festlegestelle der jeweilige Randabschnittsbereich (6) mit der zugehörigen Funktionslage (2,14) einen spitzen Winkel, vorzugsweise 60° oder kleiner, einschließt.

4. Verbindungsanordnung nach Anspruch 3, **dadurch gekennzeichnet, dass** der eingeschlossene Winkel 45° beträgt.

5. Verbindungsanordnung nach einem der vorhergehenden Ansprüche, **dadurch gekennzeichnet, dass** an mindestens einer Festlegestelle die jeweilige benachbarte Funktionslage (3) einen Hinterschnittbereich (9) aufweist, an den der Randabschnittsbereich (6) der Funktionslage (2, 14) zumindest teilweise zur formschlüssigen Anlage kommt.

6. Verbindungsanordnung nach Anspruch 5, **dadurch gekennzeichnet, dass** der Hinterschnittbereich (9) als Stufenabschnitt (10) mit sich von der Funktionslage (2,14) entfernt erweiterndem Durchschnitt (11) ausgebildet ist.

7. Verbindungsanordnung nach Anspruch 5, **dadurch gekennzeichnet, dass** der Hinterschnittbereich (9) zumindest teilweise konisch ausgebildete Abschnittsbereiche aufweist.

8. Verbindungsanordnung nach einem der vorhergehenden Ansprüche, **dadurch gekennzeichnet, dass** an mindestens einer Festlegestelle der jeweilige Randbereich am äußeren Rand der jeweiligen benachbarten Funktionslage (3) angeordnet ist.

9. Verbindungsanordnung nach einem der vorhergehenden Ansprüche, **dadurch gekennzeichnet, dass** an mindestens einer Festlegestelle der jeweilige Randbereich durch eine in der jeweiligen benachbarten Funktionslage (3) ausgebildete Ausnehmung oder Bohrung (17) vorgegeben ist.

10. Verbindungsanordnung nach Anspruch 9, **dadurch gekennzeichnet, dass** an der mindestens einen Festlegestelle der jeweilige Randabschnittsbereich (6) an einer in der jeweiligen Funktionslage (2, 14) ausgebildeten weiteren Ausnehmung oder weiteren Bohrung (16) angeordnet ist.

11. Verbindungsanordnung nach einem der vorhergehenden Ansprüche, **dadurch gekennzeichnet, dass** mindestens zwei Festlegestellen an den Funktionslagen (2, 3, 14) ausgebildet sind.

12. Verbindungsanordnung nach einem der vorhergehenden Ansprüche, **dadurch gekennzeichnet, dass** mindestens eine Funktionslage (2, 14) mindestens ein Dichtelement (5) aufweist, das jeweils einen Abdichtbereich bildet.

13. Verbindungsanordnung nach einem der vorhergehenden Ansprüche, **dadurch gekennzeichnet, dass** mindestens eine Funktionslage (2, 14) aus einem metallischen Werkstoff gebildet ist.

14. Verbindungsanordnung nach Anspruch 12 und 13, **dadurch gekennzeichnet, dass** mindestens eine Funktionslage (2, 14) eine flächig ausgebildete Metallsickendichtung (13) ist.

15. Verbindungsanordnung nach einem der vorhergehenden Ansprüche, **gekennzeichnet durch** mindestens drei Funktionslagen (2, 3, 14) und mindestens eine zwischenliegende Funktionslage (3) in Form eines abzudichtenden Bauteils.

16. Verbindungsanordnung nach einem der vorhergehenden Ansprüche, **dadurch gekennzeichnet, dass** mindestens eine der Funktionslagen (3) vorzugsweise das zwischenliegende Bauteil, eine Getriebesteuerplatte (4) ist.

## Claims

1. Connection assembly comprising:
- at least two functional layers (2, 3, 14) each having a specifiable thickness extension,
- wherein adjacent functional layers (2, 3, 14) are fixed to one another at at least one fixing point,
- wherein at the at least one fixing point one functional layer (2, 14) with at least one free edge section area (6) engages at least partially in an associated edge area of the respectively adjacent functional layer (3),
- **characterized in that** at at least one of these fixing points the engagement of the respective edge section area (6) is designed to be free of any overhang with respect to the thickness extension of the respectively adjacent functional layer (3).

2. Connection assembly as defined in claim 1, **characterized in that** the thickness extension of the functional layer (2, 14) with the respective edge section area (6) is essentially constant at least in the edge section area (6).

3. Connection assembly as defined in claim 1 or 2, **characterized in that** at at least one fixing point the respective edge section area (6) forms an acute angle, preferably 60° or less, with the associated functional layer (2, 14).

4. Connection assembly as defined in claim 3, **characterized in that** the angle formed is 45°.

5. Connection assembly as defined in any one of the preceding claims, **characterized in that** at at least one fixing point the respectively adjacent functional layer (3) has a backcut area (9), the edge section area (6) of the functional layer (2, 14) coming to rest in a form-locking manner on said backcut area at least in part.

6. Connection assembly as defined in claim 5, **characterized in that** the backcut area (9) is designed as a stepped section (10) with a transection (11) increasing in size away from the functional layer (2, 14).

7. Connection assembly as defined in claim 5, **characterized in that** the backcut area (9) has conically designed section areas at least in part.

8. Connection assembly as defined in any one of the preceding claims, **characterized in that** at at least one fixing point the respective edge area is arranged at the outermost edge of the respectively adjacent functional layer (3).

9. Connection assembly as defined in any one of the preceding claims, **characterized in that** at at least one fixing point the respective edge area is predetermined by a recess or hole (17) formed in the respectively adjacent functional layer (3).

10. Connection assembly as defined in claim 9, **characterized in that** at the at least one fixing point the respective edge section area (6) is arranged at a further recess or further hole (16) formed in the respective functional layer (2, 14).

11. Connection assembly as defined in any one of the preceding claims, **characterized in that** at least two fixing points are formed on the functional layers (2, 3, 14).

12. Connection assembly as defined in any one of the preceding claims, **characterized in that** at least one functional layer (2, 14) has at least one sealing element (5) forming a respective sealing area.

13. Connection assembly as defined in any one of the preceding claims, **characterized in that** at least one functional layer (2, 14) is formed from a metallic material.

14. Connection assembly as defined in claim 12 and 13, **characterized in that** at least one functional layer (2, 14) is a metal beaded seal (13) of an areal design.

15. Connection assembly as defined in any one of the preceding claims, **characterized by** at least three functional layers (2, 3, 14) and at least one intermediate functional layer (3) in the form of a component to be sealed.

16. Connection assembly as defined in any one of the preceding claims, **characterized in that** at least one of the functional layers (3), preferably the intermediate component, is a transmission control plate (4).

## Revendications

1. Système de raccordement comprenant :
- au moins deux couches fonctionnelles (2, 3, 14) présentant chacune une épaisseur prédéfinie,
- des couches fonctionnelles (2, 3, 14) adjacentes étant fixées les unes sur les autres en au moins un point de fixation,
- une couche fonctionnelle (2, 14) présentant au moins une zone de section de bord libre (6) venant en prise au moins en partie, au ou aux points de fixation, dans une zone de bord associée de la couche fonctionnelle (3) adjacente respective,
- **caractérisé en ce que**, en au moins un de ces points de fixation, la mise en prise de la zone de section de bord (6) respective est réalisée sans dépasser de l'épaisseur de la couche fonctionnelle (3) adjacente respective.

2. Système de raccordement selon la revendication 1, **caractérisé en ce que** l'épaisseur de la couche fonctionnelle (2, 14) comprenant la zone de section de bord (6) respective est sensiblement constante au moins dans la zone de section de bord (6).

3. Système de raccordement selon la revendication 1 ou 2, **caractérisé en ce que**, en au moins un point de fixation, la zone de section de bord (6) respective forme avec la couche fonctionnelle (2, 14) associée un angle aigu, de préférence inférieur ou égal à 60°.

4. Système de raccordement selon la revendication 3, **caractérisé en ce que** l'angle formé atteint 45°.

5. Système de raccordement selon l'une quelconque des revendications précédentes, **caractérisé en ce que**, en au moins un point de fixation, la couche fonctionnelle (3) adjacente respective comprend une zone en contre-dépouille (9), contre laquelle la zone de section de bord (6) de la couche fonctionnelle (2, 14) vient au moins en partie en appui par coopération de formes.

6. Système de raccordement selon la revendication 5, **caractérisé en ce que** la zone en contre-dépouille (9) est réalisée sous la forme d'une section étagée (10) présentant un passage (11) s'élargissant à distance de la couche fonctionnelle (2, 14).

7. Système de raccordement selon la revendication 5, **caractérisé en ce que** la zone en contre-dépouille (9) présente des zones de section au moins en partie coniques.

8. Système de raccordement selon l'une quelconque des revendications précédentes, **caractérisé en ce que**, en au moins un point de fixation, la zone de bord respective est agencée sur le bord extérieur de la couche fonctionnelle (3) adjacente respective.

9. Système de raccordement selon l'une quelconque des revendications précédentes, **caractérisé en ce que**, en au moins un point de fixation, la zone de bord respective est prédéfinie par un évidement ou un trou (17) ménagé dans la couche fonctionnelle (3) adjacente respective.

10. Système de raccordement selon la revendication 9, **caractérisé en ce que**, en au moins un point de fixation, la zone de section de bord (6) respective est agencée sur un autre évidement ou un autre trou (16) formé dans la couche fonctionnelle (2, 14) respective.

11. Système de raccordement selon l'une quelconque des revendications précédentes, **caractérisé en ce qu'**au moins deux points de fixation sont formés sur les couches fonctionnelles (2, 3, 14).

12. Système de raccordement selon l'une quelconque des revendications précédentes, **caractérisé en ce qu'**au moins une couche fonctionnelle (2, 14) comprend au moins un élément d'étanchéité (5), qui forme dans chaque cas une zone d'étanchéité.

13. Système de raccordement selon l'une quelconque des revendications précédentes, **caractérisé en ce qu'**au moins une couche fonctionnelle (2, 14) est composée d'un matériau métallique.

14. Système de raccordement selon les revendications 12 et 13, **caractérisé en ce qu'**au moins une couche fonctionnelle (2, 14) est un joint de moulure métallique (13) plat.

15. Système de raccordement selon l'une quelconque des revendications précédentes, **caractérisé par** au moins trois couches fonctionnelles (2, 3, 14) et au moins une couche fonctionnelle (3) intermédiaire prenant la forme d'une pièce à étanchéifier.

16. Système de raccordement selon l'une quelconque des revendications précédentes, **caractérisé en ce qu'**au moins une des couches fonctionnelles (3) de préférence la pièce intermédiaire, est un plateau de commande de transmission (4).
